# EUROPEAN PATENT APPLICATION

(11) **EP 0 539 915 A1**
(43) Date of publication of application: **05.05.1993**
(21) Application number: 92118327.3
(22) Date of filing: 27.10.1992
(51) Int. Cl.: G02B 6/44

(54) **Composite power/optical cable**

(30) Priority: 01.11.1991 NO 914282
(71) Applicant: ALCATEL STK A/S, N-0508 Oslo 5 (NO)
(72) Inventor: Berthelsen, Gunnar Claus, N-1300 Sandvika (NO); Balog, Georg Endre, N-3408 Tranby (NO); Larsen, Jan Erik, N-2030 Nannestad (NO)
(74) Representative: Pohl, Herbert, Dipl.-Ing

(57) **Abstract**

This invention relates to a composite power/optical fiber cable comprising A) a central single core power conductor (1), having layer(s) of insulation (2), a metal screen (3) and corrosion protective layers including an inner plastic sheath (4), and B) at least one optical fiber (11:16;22;27;31;46;50). The at least one optical fiber is arranged between the screen (3) and the plastic sheath (4). The optical fibers can be incorporated in the power cable in the form of fibers encompassed by a metal tube, - grouped in ribbons, bands or units.

## Description

The present invention relates to a composite cable comprising a single core power cable part and an optical fiber part. The power cable comprises a central power conductor and one or more layers of insulation material as well as an outer metal screen and corrosion protection.

US Patent No. 4,971,420 (Smith) relates to a composite cable in which the power part is intended for Supplying power to repeaters for fiber optic signals. This cable is provided with one or more layers of metal armour wires and the optical fibers are arranged in laser-welded tubes which are substituted for some of the armour wires.

The drawbacks of including the optical fibers within the armour layers are that the fibers have to be jointed as often as the armouring wires, each 1200-1800 meters. This results in losses in the fibers, longer jointing time, reduced output of the armouring machine and higher cost altogether.

The object of the present invention is to improve composite cables of the mentioned type and avoid the said drawbacks by arranging the optical fibers at an alternative place within the single core power cable.

The features of the invention are defined in the claims. When employing the features of the invention by arranging the optical fibers above a metal screen and underneath the armour, we have obtained a reliable composite cable which is capable of transmitting optical signals and electrical power at voltages in the range of 10 to 1100 kilovolts. The optical fibers can be incorporated in the power cable in the form of fibers encompassed by a metal tube and the tubes can be grouped in ribbons, bands or units.

Above mentioned and other features and objects of the present invention will clearly appear from the following detailed description of embodiments of the invention taken in conjunction with the drawings, where
Figure 1 shows the crossection of a power cable,
Figures 2 to 9 Schematically illustrate examples of incorporating optical fibers in a single core power cable, and
Figures 10 and 11 shows the fibers applied to a tape.

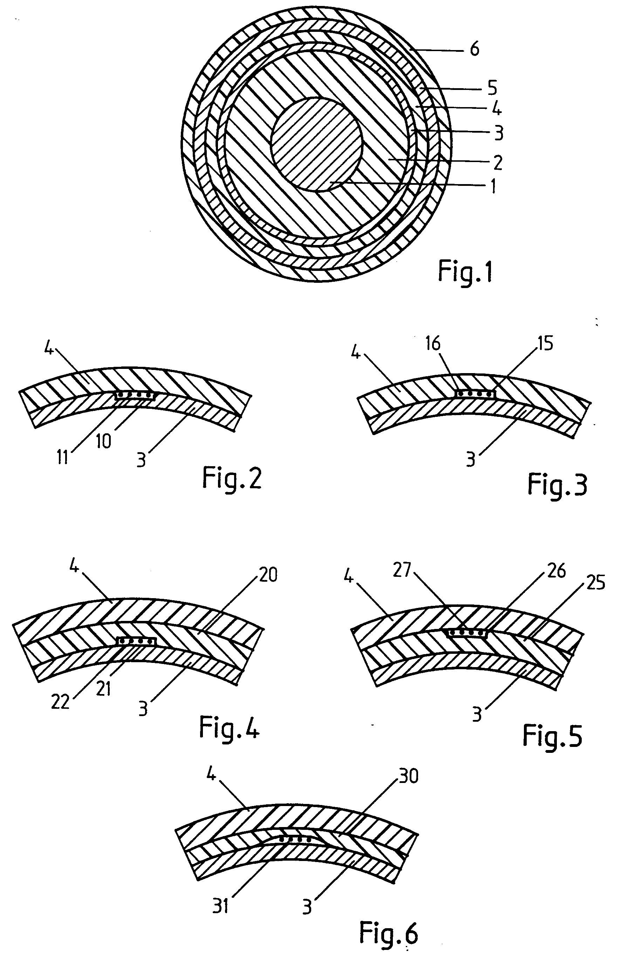

Figure 1 schematically illustrates the principles of the invention in connection with a single core power cable having a conductor 1, a semiconducting layer (not shown), one or more layers of insulation material 2, a metal screen 3 which can be a lead sheath and which may include a semiconducting layer (not shown), a first corrosion protecting layer 4 such as a plastic sheath, conventional (metal or synthetic) armour 5 and a conventional second corrosion protecting layer 6. The fiber optic cables should be arranged at the interface between layers 3 and 4 as described below, in connection with various embodiments of the invention. At least some of the optical fibers can be constituted by a fiber ribbon or band.

In Figure 2 is schematically illustrated a section of a composite cable having a lead sheath 3 and a plastic sheath 4, where optical fibers 11 are arranged in a slot 10 provided in a metal sheath 3 constituting the metal screen. There can be several fibers or fiber tapes in the slot and there can be more than one slot in the sheath.

In Figure 3 is schematically illustrated a section of a composite cable having a metal screen 3 and a plastic sheath 4, where optical fibers 16 are arranged in a slot 15 provided in the plastic sheath 4.

In Figure 4 and 5 are schematically illustrated sections of a composite cable having a metal screen 3 and a plastic sheath 4, where optical fibers 22 and 27 respectively are arranged in a slot 21 or 26 provided in a second plastic sheath 20 or 25 arranged over the metal screen 3, underneath the first plastic sheath 4.

In Figure 6 is schematically illustrated a section of a composite cable having a metal screen 3 and a plastic sheath 4, where optical fibers 31 are arranged in a flexible covering or wrapping 30 of insulation material arranged between the metal screen 3 and the first plastic sheath 4.

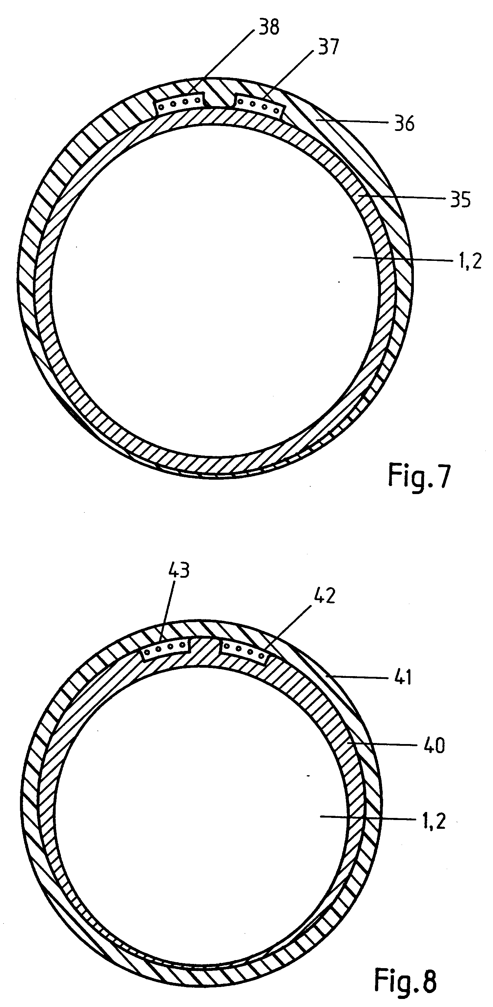

In Figure 7 is illustrated a cable having an eccentrical plastic sheath 36 over a metal screen 35, with slots 37 and 38 containing optical fibers. In Figure 8 there is shown a cable having an eccentrical lead sheath 40 with slots 42 and 43 for optical fibers, and a plastic sheath 41 closing the slots.

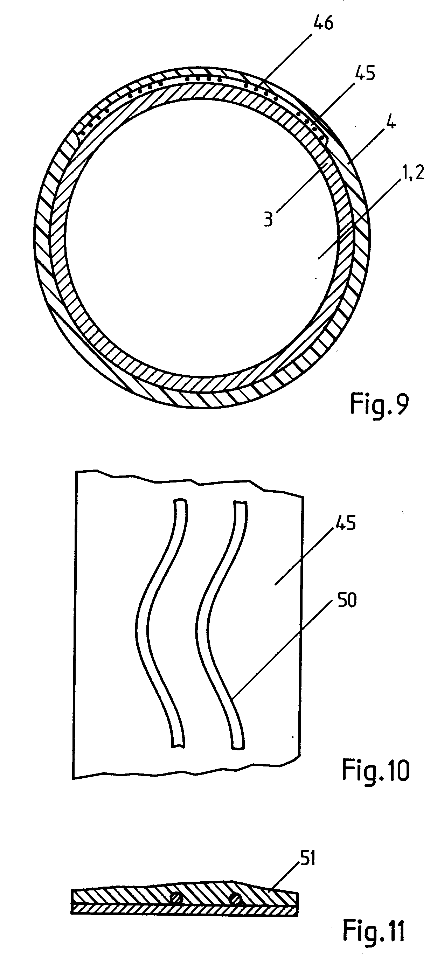

In Figure 9 is schematically illustrated a composite cable having a lead sheath 3 and a plastic sheath 4, where optical fibers 46, - in the form of fibers encompassed by a metal tube, - grouped in ribbons, bands or units, - are arranged in or on a tape 45 which may be folded or wound around the metal screen 3. A number of optical fibers 46 in metal tubes are glued (51, Figure 11) to the tape 45 or extruded or otherwise incorporated in the tape 45.

A number of optical fibers 50, of which only two is shown in Figure 10, may be applied to, or in, the tape in a wavy manner. A crossection of Figure 10 is illustrated in Figure 11.

The tape 45 may be made of the same material as the material of the plastic sheath 4, such as PE or PVC, in order to unite the tape with the sheath. Otherwise the tape can be made of a different material or it can be treated to avoid lamination with the plastic sheath.

## Claims

1. Composite power/optical fiber cable comprising A) a central single core power conductor (1), having layer(s) of Insulation (2), a metal screen (3) and corrosion protective layers including an inner plastic sheath (4), and B) at least one Optical fiber (), **characterized in that** the at least one optical fiber (11;16;22;27;31;46;50) is arranged between the screen (3) and the plastic sheath (4).

2. Cable according to claim 1, **characterized in that** at least some of the optical fibers are constituted by a fiber ribbon or band.

3. Cable according to claim 1 or 2, **characterized in that** the optical fibers (11) are arranged in at least one slot (10) provided in a metal sheath (3) constituting the metal screen.

4. Cable according to claim 1 or 2, **characterized in that** the optical fibers (16) are arranged in at least one slot (15) provided in the plastic sheath (4).

5. Cable according to claim 1 or 2, **characterized in that** the optical fibers (22;27) are arranged in at least one slot (21;26) provided in a second plastic sheath (20;25) arranged over the metal screen (3), underneath the first plastic sheath (4).

6. Cable according to claim 1 or 2, **characterized in that** the optical fibers (31) are arranged in a flexible covering or wrapping (30) of insulation material arranged between the metal screen (3) and the first plastic sheath (4).

7. Cable according to claim 3 or 4, **characterized in that** the slot(s) (37,38;42,43) is/are made in the thick part of a metal and/or plastic sheath (40;36,) having an eccentrical crossection.

8. Cable according to claim 1, **characterized in that** a number of optical fibers (46:50), - in the form of fibers encompassed by a metal tube, - grouped in ribbons, bands or units, - are glued to or incorporated/extruded in a tape (45) arranged underneath the plastic sheath (4).

9. Cable according to claim 8, **characterized in that** a number of optical fibers (50) are applied to, or in, the tape in a wavy manner.

10. Cable according to claim 8, **characterized in that** the tape (45) is applied in parallel with the cable axis.

11. Cable according to claim 8 or 9, **characterized in that** the tape (45) is made of the same material as the material of the plastic sheath (4), in order to unite the tape with the sheath.
